# EUROPÄISCHE PATENTSCHRIFT

(11) **EP 2 367 961 B1**
(45) Veröffentlichungstag und Bekanntmachung des Hinweises auf die Patenterteilung: **26.12.2012**
(21) Anmeldenummer: 09763888.6
(22) Anmeldetag: 06.11.2009
(51) Int. Cl.: C21C 5/30, C21C 5/34, C21C 5/46, F27D 19/00, F27D 21/00, C21C 5/52

(54) **VERFAHREN UND VORRICHTUNG ZUR KONTROLLE VON VIBRATIONEN EINES METALLURGISCHEN GEFÄSSES**
METHOD AND DEVICE FOR MONITORING VIBRATIONS OF A METALLURGICAL VESSEL
PROCÉDÉ ET DISPOSITIF DE COMMANDE DES VIBRATIONS D'UNE CUVE MÉTALLURGIQUE

(30) Priorität: 23.12.2008 AT 20132008
(43) Veröffentlichungstag der Anmeldung: 28.09.2011
(73) Patentinhaber: Siemens VAI Metals Technologies GmbH, 4031 Linz (AT)
(72) Erfinder: FLEISCHANDERL, Alexander, A-4645 Grünau (AT); WIMMER, Peter, A-4040 Linz (AT); STAUDINGER, Guenther, A-4810 Gmunden (AT); HIEBLER, Martin, A-4060 Leonding (AT)
(74) Vertreter: Maier, Daniel Oliver
(86) Internationale Anmeldenummer: PCT/EP2009/064720
(87) Internationale Veröffentlichungsnummer: WO 2010/072459

(56) Entgegenhaltungen:
- BE-A1- 846 971
- GB-A- 2 139 743
- US-A- 4 135 915
- US-A1- 2008 047 396
- US-B1- 6 264 716

## Beschreibung

Die Erfindung betrifft ein Verfahren und eine Vorrichtung zur Kontrolle von Vibrationen eines metallurgischen Gefäßes, die auftreten, während Gas aus Düsen in sich in dem metallurgischen Gefäß befindende flüssige Metallschmelze injiziert wird.

Insbesondere bei zur Rostfreistahl-Erzeugung verwendeten AOD (argon oxygen decarburization) Konvertern werden große Gasmengen über Düsen in die flüssige Schmelze des Rohstahls eingebracht. Dadurch kann einerseits der Partialdruck von Gasen in der Schmelze beeinflusst werden, andererseits wird in der Schmelze durch Aufsteigen der injizierten Gasblasen eine Badströmung erzeugt. Diese Strömung führt zu einer erwünschten Durchmischung der Schmelze. Die aufsteigenden Gasblasen führen jedoch zu einer statistisch schwankenden Verschiebung des Schwerpunktes des mit flüssiger Schmelze gefüllten Konverters, wodurch der Konverter zu Vibrationen angeregt wird. Mit dem Konverter direkt oder indirekt verbundene Anlagenteile - besonders solche, die starr mit dem Konverter verbunden sind - können durch die Vibrationen des Konverters auch zu Vibrationen angeregt werden. Vibrationen belasten den Konverter und mit ihm verbundene Anlagenteile wie beispielsweise das zum Kippen des Konverters vorgesehene Getriebe und dessen Aufhängung stark und können zu vorzeitigem Verschleiß oder Bruch führen. Auch Schwingungen des Fundamentes, auf dem sich der Konverter und zugeordnete Anlagenteile wie beispielsweise das Getriebe befinden, werden angeregt. Diese können schädigend auf das Fundament selbst sowie dessen Umgebung wirken.

Aus US20080047396 ist es bekannt, die Durchmischung einer flüssigen Metallschmelze mittels Gasinjektion aus Unterbaddüsen dadurch zu überwachen und zu steuern, dass die Vibrationen des metallurgischen Gefäßes gemessen werden. Das Messergebnis ist ein Indikator für die Güte der Durchmischung. Auf Basis des Messergebnisses wird die pro Zeiteinheit injizierte Gesamtmenge an Gas, die Blasrate, zur Erzielung einer optimalen Durchmischung verändert. Eine Verringerung einer Blasrate gegenüber in einem Blaseschema festgelegten Werten ist jedoch gleichbedeutend mit einer Verlängerung der Tap-to-Tap-Zeit und damit mit einer Verringerung der Produktivität des metallurgischen Gefäßes. Zudem kann eine Veränderung der Blasrate auch die metallurgischen Eigenschaften des Produktes beeinflussen.

Es ist die Aufgabe der vorliegenden Erfindung, ein Verfahren und eine Vorrichtung zur Kontrolle von während der Injektion von Gas in ein mit flüssiger Metallschmelze gefülltes metallurgisches Gefäß auftretenden Vibrationen des metallurgischen Gefäßes bereitzustellen, welche es erlauben, die Vibrationen des metallurgischen Gefäßes unter weitgehender Beibehaltung der Blasrate zu kontrollieren.

Diese Aufgabe wird gelöst durch ein
Verfahren zur Kontrolle von während der Injektion von Gas in ein mit flüssiger Metallschmelze gefülltes metallurgisches Gefäß auftretenden Vibrationen des metallurgischen Gefäßes,
wobei pro Zeiteinheit eine bestimmte Gesamtmenge Gas in die flüssige Metallschmelze injiziert wird,
und die Gesamtmenge Gas durch mehrere individuelle Düsen im metallurgischen Gefäß in die flüssige Metallschmelze injiziert wird,
und wobei mit den auftretenden Vibrationen des metallurgischen Gefäßes korrelierende Messwerte während des Injizierens gemessen werden,
dadurch gekennzeichnet, dass
unter weitgehender Konstanthaltung der pro Zeiteinheit injizierten Gesamtmenge Gas die aus individuellen Düsen pro Zeiteinheit injizierte Menge Gas in Abhängigkeit von den gemessenen, mit den auftretenden Vibrationen des metallurgischen Gefäßes korrelierenden, Messwerten verändert wird.

Die aus individuellen Düsen pro Zeiteinheit injizierte Menge Gas wird in Abhängigkeit von den gemessenen, mit den auftretenden Vibrationen des metallurgischen Gefäßes korrelierenden, Messwerten verändert. Dadurch ändert sich die Durchmischung der flüssigen Metallschmelze und entsprechend der Schwerpunkt des mit flüssiger Metallschmelze gefüllten metallurgischen Gefäßes. Entsprechend kann erreicht werden, dass Vibrationen verstärkt oder geschwächt werden. Infolgedessen ist es möglich, mit dem metallurgischen Gefäß direkt oder indirekt verbundene Anlagenteile - im Falle eines Konverters beispielsweise im Wesentlichen die Aufhängung, Auflager, Tragring, Kippantrieb, Getriebe und Fundament,- von schädlichen Vibrationsfrequenzen freizuhalten beziehungsweise die Intensität von Vibrationen mit schädlichen Frequenzen zu verringern. Infolgedessen sinkt die mechanische Beanspruchung dieser Anlagenteile. Geringere mechanische Beanspruchung und damit verbundene längere Standzeiten der Anlagenteile erhöhen die Produktivität des metallurgischen Gefäßes.

Unter mit den auftretenden Vibrationen des metallurgischen Gefäßes korrelierenden Messwerten sind Messwerte zu verstehen, die einen quantifizierbaren Rückschluss auf die auftretenden Vibrationen des metallurgischen Gefäßes erlauben. Messwerte für die Vibrationen des metallurgischen Gefäßes sind von dem Begriff "mit den auftretenden Vibrationen des metallurgischen Gefäßes korrelierende Messwerte" mit umfasst.
Die mit den auftretenden Vibrationen des metallurgischen Gefäßes korrelierenden Messwerte sind beispielsweise
- Frequenzen und/oder Intensitäten von Vibrationen des metallurgischen Gefäßes, und/oder
- Frequenzen und/oder Intensitäten von Vibrationen von mit dem metallurgischen Gefäß direkt oder indirekt verbundenen Anlagenteilen.

Werden durch auftretende Vibrationen des metallurgischen Gefäßes direkt oder indirekt verbundene Anlagenteile zu Vibrationen angeregt, so korrelieren diese Vibrationen mit den Vibrationen des metallurgischen Gefäßes in einer Weise, dass aus der Messung dieser Vibrationen auf die Vibrationen des metallurgischen Gefäßes rückgeschlossen werden kann. Derartige Rückschlüsse können beispielsweise dadurch ermöglicht werden, dass gleichzeitig
- auftretende Vibrationen des metallurgischen Gefäßes, und
- mit den auftretenden Vibrationen des metallurgischen Gefäßes korrelierende Messwerte gemessen werden,
und die Korrelation, also der Zusammenhang, zwischen ihnen ermittelt wird. Die Kenntnis der derart ermittelten Korrelation erlaubt es dann, aus den Messwerten auf die Vibrationen des metallurgischen Gefäßes zu schließen.

Unter direkt mit dem metallurgischen Gefäß verbundenen Anlagenteilen sind Anlagenteile zu verstehen, die unmittelbar mit dem metallurgischen Gefäß verbunden sind. Unter indirekt mit dem metallurgischen Gefäß verbundenen Anlagenteilen sind Anlagenteile zu verstehen, die über ein Anlagenteil oder mehrere Anlagenteile - also mittelbar - mit dem metallurgischen Gefäß verbunden sind.

Die weitgehende Konstanthaltung der pro Zeiteinheit injizierten Gesamtmenge an Gas, also der Blasrate, ermöglicht eine weitgehende Konstanthaltung der Produktivität sowie der metallurgischen Eigenschaften des Produktes.

Es ist dem Fachmann bekannt, dass sich die Blasrate bei industrieller Anwendung nicht ganz exakt konstant halten lässt, sondern der tatsächlich vorliegende Wert zeitlich um einen vorgegebenen Wert herum fluktuiert. Unter weitgehender Konstanthaltung ist im Rahmen der vorliegenden Erfindung zu verstehen, dass der tatsächlich vorliegende Wert zeitlich um +/- 5 % um einen vorgegebenen Wert fluktuiert.

Das metallurgische Gefäß kann jede Art von Prozessgefäß für flüssige Metallschmelzen, bevorzugt für Rohstahlschmelzen oder Roheisenschmelzen, sein, also beispielsweise Konverter, Pfanne, Tiegel, EAF. Bevorzugt ist es ein kippbarer Konverter.

Das metallurgische Gefäß besitzt Düsen zum Injizieren von Gas in den von dem Gefäß umschlossenen Raum. Die Anordnung der Düsen ist dabei so gewählt, dass sie beim Betrieb des metallurgischen Gefäßes unterhalb des Spiegels der flüssigen Metallschmelze in dem metallurgischen Gefäß liegen; solche Düsen werden auch Unterbaddüsen genannt. Entsprechend wird im Betrieb durch diese Düsen Gas in die flüssige Metallschmelze injiziert. Die Düsen können im Boden oder den Seitenwänden des metallurgischen Gefäßes angeordnet sein.
Bevorzugt sind die Düsen in den Seitenwänden des metallurgischen Gefäßes angeordnete Unterbaddüsen.

Die Messung der mit den auftretenden Vibrationen des metallurgischen Gefäßes korrelierenden Messwerten während des Injizierens erfolgt entweder kontinuierlich oder in bestimmten Zeitabständen. Eine kontinuierliche Messung hat den Vorteil, jederzeit über den aktuellen Status der Vibrationen informiert zu sein, ist jedoch mit einem erheblichen Datenverarbeitungsaufwand verbunden. Eine Messung in bestimmten Zeitabständen hat gegenüber einer kontinuierlichen Messung den Vorteil, dass der Datenverarbeitungsaufwand aufgrund der geringeren anfallenden Menge von Messdaten sinkt. Sie liefert jedoch nur zu ausgewählten Zeitpunkten Informationen über den Status der Vibrationen.
Nach einer Ausführungsform des Verfahrens wird zumindest für eine, vorzugsweise zwei oder mehr, der individuellen Düsen die aus ihr pro Zeiteinheit injizierte Menge Gas zumindest zeitweise in Abhängigkeit von mit den auftretenden Vibrationen des metallurgischen Gefäßes korrelierenden Messwerten verändert.
Dabei sollte für eine solche Düse jederzeit ein Gasfluss durch die Düse aufrechterhalten werden, um keine Infiltrationen von flüssiger Metallschmelze in die Düse und dadurch verursachte Beschädigung der Düse zu riskieren. Ein komplettes Abschalten des Gasflusses durch die Düse ist also zu vermeiden. Je größer die Anzahl der individuellen Düsen, für welche die aus ihnen pro Zeiteinheit injizierte Menge Gas verändert wird, ist, desto feiner nuanciert lassen sich die Vibrationen des metallurgischen Gefäßes kontrollieren.

Die Veränderung der pro Zeiteinheit injizierten Menge Gas kann stufenweise oder stetig erfolgen. Im Falle einer stufenweisen Veränderung wird zwischen auf Grundlage der prozesstechnischen Bedingungen vorbestimmten Einstellungsstufen gewechselt.
Eine stetige Veränderung bietet gegenüber einer stufenweisen Veränderung den Vorteil, dass eine feiner nuancierte Kontrolle der Vibrationen des metallurgischen Gefäßes möglich ist, und ist daher bevorzugt.

Dabei ist es bevorzugt, dass die durch die Veränderung der pro Zeiteinheit aus einer individuellen Düse injizierte Menge Gas
hervorgerufene Änderung zumindest eines mit den auftretenden Vibrationen des metallurgischen Gefäßes korrelierenden Messwertes
verfolgt wird,
und die Veränderung der pro Zeiteinheit aus einer individuellen Düse injizierten Menge Gas so lange durchgeführt wird, bis der zumindest eine mit den auftretenden Vibrationen des metallurgischen Gefäßes korrelierende Messwert einen vorgegebenen Wert erreicht oder bis der Gasfluss aus der Düse ein vorgegebenes Maximum oder Minimum erreicht. Das Maximum oder Minimum wird auf Basis von prozesstechnischen Vorgaben für die konkret zu behandelnde flüssige Metallschmelze vorgegeben. Der vorgegebene Wert für den zumindest einen mit den auftretenden Vibrationen des metallurgischen Gefäßes korrelierenden Messwert ergibt sich daraus, in welchem Ausmass die Vibrationen des metallurgischen Gefäßes kontrolliert werden sollen.

Da die beiden Varianten stufenweise Veränderung und stetige Veränderung zumindest zeitweise anzuwenden sind, sind auch Mischformen aus ihnen möglich. Beispielsweise kann die pro Zeiteinheit injizierte Menge Gas zuerst stufenweise verändert werden und dann, um eine bessere Feineinstellung zu ermöglichen, stetig verändert werden. Oder es wird zuerst stetig verändert und anschließend stufenweise.

Nach einer bevorzugten Ausführungsform des Verfahrens werden die mit den auftretenden Vibrationen des metallurgischen Gefäßes korrelierenden Messwerte gefiltert und digital bearbeitet, bevor sie zur Veränderung der aus individuellen Düsen pro Zeiteinheit injizierten Menge Gas herangezogen werden.
Dadurch wird es ermöglicht, den Verlauf bestimmter, beispielsweise als besonders störend bekannter, Vibrationen des metallurgischen Gefäßes genauer zu verfolgen.

Nach einer bevorzugten Ausführungsform werden beim Messen der mit den auftretenden Vibrationen des metallurgischen Gefäßes korrelierende Messwerte Frequenzen und/oder Intensitäten von Vibrationen ermittelt.

Nach einer Ausführungsform korrelieren die mit den auftretenden Vibrationen des metallurgischen Gefäßes korrelierende Messwerte mit Vibrationen des metallurgischen Gefäßes, die Frequenzen zwischen 0,1 und 100 Hertz, bevorzugt zwischen 0,2 Hertz und 20 Hertz aufweisen. Dabei sind die Werte 0,1 Hertz und 100 Hertz inkludiert. Frequenzen oberhalb 100 Hertz weisen kaum mehr ein Störpotenzial auf.

Nach einer weiteren Ausführungsform korrelieren die mit den auftretenden Vibrationen des metallurgischen Gefäßes korrelierende Messwerte, in Abhängigkeit von denen die aus individuellen Düsen pro Zeiteinheit eingeleitete Menge Gas verändert wird, mit Vibrationen des metallurgischen Gefäßes zwischen 0,2 Hertz und 20 Hertz. Diese Frequenzen sind mit besonderem Augenmerk zu Überwachen, da diese das höchste Schadenspotenzial aufweisen.

Die Frequenzen und Intensitäten der Vibrationen des metallurgischen Gefäßes werden mittels eines Vibrationssensors oder mehrerer Vibrationssensoren gemessen, wobei das Messprinzip beispielsweise auf Drehmomentenmessung, Beschleunigungsmessung, DMS (Dehnungsmessstreifen), Wegaufnehmern oder Geschwindigkeitsaufnehmern basieren kann.
Bevorzugt werden Beschleunigungsaufnehmer, DMS oder Wegaufnehmer eingesetzt, da diese kostengünstig und mit wenig Aufwand anzubringen sind.

Ein weiterer Gegenstand der Erfindung ist eine Vorrichtung zur Durchführung des erfindungsgemäßen Verfahrens.

Es handelt sich um eine Vorrichtung zur Kontrolle von während der Injektion von Gas in ein mit flüssiger Metallschmelze gefülltes metallurgisches Gefäß auftretenden Vibrationen des metallurgischen Gefäßes, welches mit mehreren individuellen Düsen zur Injektion von Gas versehen ist, wobei die individuellen Düsen jeweils mit einer eigenen Gaseinspeisungsleitung verbunden sind,
mit mindestens einem Sensor für mit den auftretenden Vibrationen des metallurgischen Gefäßes korrelierende Messwerte,
mit einer Verarbeitungseinheit zur Verarbeitung der von dem Sensor gemessenen Messwerte,
dadurch gekennzeichnet, dass
in mindestens zwei Gaseinspeisungsleitungen mindestens eine Vorrichtung zur Änderung des Gasflusses durch die Gaseinspeisungsleitung vorhanden ist,
und jede Vorrichtung zur Änderung des Gasflusses mit der Verarbeitungseinheit verbunden ist.

Der Sensor misst mit den auftretenden Vibrationen des metallurgischen Gefäßes korrelierende Messwerte, welche in der Verarbeitungseinheit verarbeitet werden. Dabei wird aus den Messwerten quantitative Information über die auftretenden Vibrationen des metallurgischen Gefäßes, also beispielsweise über Frequenz und Intensität der Vibrationen, gewonnen. Der Sensor kann an dem metallurgischen Gefäß, beispielsweise einem Konverter, angebracht sein. Nach einer anderen Ausführungsform ist der Sensor an einem direkt oder indirekt mit dem metallurgischen Gefäß verbundenen Anlagenteil angebracht; beispielsweise im Falle eines Konverters an dem zum Kippen des Konverters vorgesehenen Getriebe, an der Aufhängung, oder am Fundament, auf dem sich der Konverter und zugeordnete Anlagenteile wie beispielsweise das Getriebe befinden.
Es ist mindestens ein Sensor vorhanden, es können aber auch mehrere Sensoren vorhanden sein. Wenn mehrere Sensoren vorhanden sind, können diese an einer oder an mehreren der oben genannten Stellen angebracht sein.

Über die Verbindung zu den Vorrichtungen zur Änderung des Gasflusses gibt die Verarbeitungseinheit diesen Vorgaben zur Änderung des Gasflusses. Diese Vorgaben werden auf Basis der in der Verarbeitungseinheit gewonnenen Information über die auftretenden Vibrationen des metallurgischen Gefäßes so erstellt, dass Vibrationen des metallurgischen Gefäßes mit gewissen Frequenzen abgeschwächt werden sollen. Die Erstellung der Vorgaben erfolgt aufgrund von in der Verarbeitungseinheit hinterlegtem Expertenwissen. Dieses Expertenwissen kann beispielsweise bei der Inbetriebnahme des metallurgischen Gefäßes ermittelt und hinterlegt werden und besteht beispielsweise aus den Eigenfrequenzen des metallurgischen Gefäßes, den Eigenfrequenzen der mit diesem direkt oder indirekt verbundenen Anlagenteile, beziehungsweise der Eigenfrequenz des Gesamtsystems aus metallurgischem Gefäß und mit diesem direkt oder indirekt verbundenen Anlagenteilen. Das Gesamtsystem besteht im Falle eines Konverters als metallurgischem Gefäß im Wesentlichen aus Fundament, Getriebe, Kippantrieb, Tragring, Aufhängung und Auflager.
Die Verbindung der Verarbeitungseinheit mit den Vorrichtungen zur Änderung des Gasflusses kann unmittelbar sein. Sie kann auch mittelbar sein, im Fall von Ventilen als Vorrichtungen zur Änderung des Gasflusses beispielsweise über einen Ventilstand zur Steuerung der Ventile. Die Begriffe verbinden und Verbindung sind in dem Zusammenhang so zu verstehen, dass eine Übermittlung von Vorgaben an die Vorrichtungen zur Änderung des Gasflusses möglich ist. Im Fall einer mittelbaren Verbindung, also einer Verbindung über eine weitere Vorrichtung wie beispielsweise einen Ventilstand, bedeutet das, dass die Übermittlung von Vorgaben von der Verarbeitungseinheit über die weitere Vorrichtung erfolgt.

Dadurch, dass in mindestens zwei Gaseinspeisungsleitungen mindestens eine Vorrichtung zur Änderung des Gasflusses vorhanden ist, kann die pro Zeiteinheit eingeleitete Gesamtmenge an Gas, die Blasrate, weitgehend konstant gehalten werden, denn eine Änderung an einer Düse kann durch eine gegenläufige Veränderung an einer anderen Düse ausgeglichen werden.

Bevorzugterweise erlaubt die Vorrichtung zur Änderung des Gasflusses durch die Gaseinspeisungsleitung eine stufenweise Änderung des Gasflusses. Es handelt sich also beispielsweise um ein Regelventil, welches den aktuellen Durchfluss auf den Sollwert regelt.

Nach einer Ausführungsform ist die Vorrichtung zur Änderung des Gasflusses durch die Gaseinspeisungsleitung eine Vorrichtung zur stetigen Änderung des Gasflusses. Es handelt sich also beispielsweise um ein Regelventil, welches den aktuellen Durchfluss auf den Sollwert regelt.

Vorzugsweise ist der Sensor für mit den auftretenden Vibrationen des metallurgischen Gefäßes korrelierende Messwerte ein Vibrationssensor. Ein Vibrationssensor ist ein Gerät, das mechanische Schwingungen in weiterverwertbare Signale umwandelt, bevorzugt sind das elektrische Signale.

Bevorzugterweise ist der Vibrationssensor ein Drehmomentensensor, ein Beschleunigungsaufnehmer, ein Wegaufnehmer, DMS oder ein Geschwindigkeitsaufnehmer. Aufgrund Preis und Einfachheit sind Beschleunigungsaufnehmer, Wegaufnehmer und Geschwindigkeitsaufnehmer zu bevorzugen.

Nachfolgend wird die Erfindung anhand schematischer Figuren, die Ausführungsformen darstellen, beschrieben.
Figur 1 und Figur 2 zeigen eine erfindungsgemäße Vorrichtung mit einem Konverter mit Unterbaddüsen.
Figur 3 zeigt eine erfindungsgemäße Vorrichtung mit einem Konverter mit Unterbaddüsen und Düsen in der Seitenwand des Konverters, wobei mehrere Sensoren jeweils an verschiedenen Orten angeordnet sind.

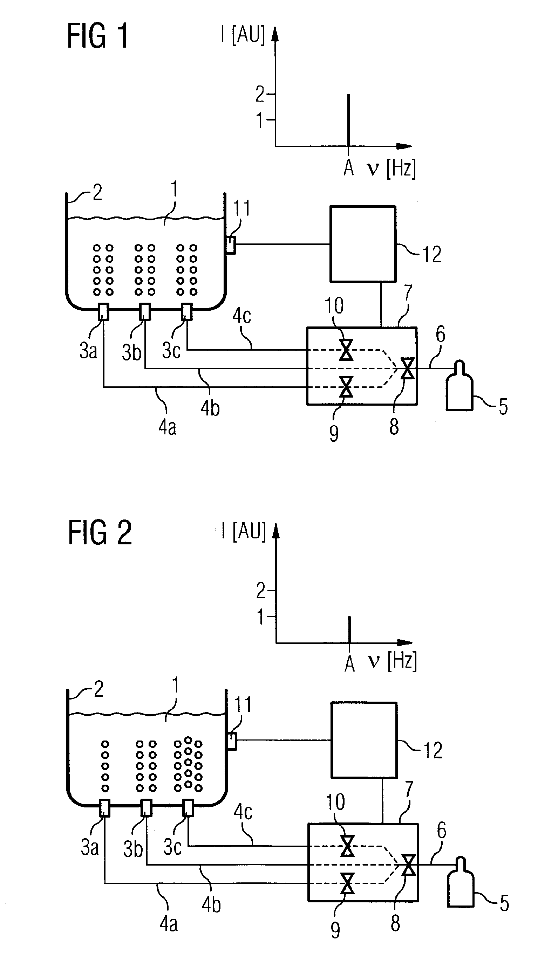

In Figur 1 wird in einen mit flüssigem Rohstahl 1 gefüllten Konverter 2 durch Unterbaddüsen 3a, 3b, 3c Gas, dargestellt durch Blasen im Rohstahl, injiziert. Die Unterbaddüsen 3a,3b,3c werden jeweils separat durch die Gaseinspeisungsleitungen 4a,4b,4c mit Gas aus einer mit einem Gasreservoir 5 verbundenen Gasquellleitung 6 versorgt. Die Versorgung erfolgt dabei über einen Ventilstand 7. In dem Ventilstand 7 kann die pro Zeiteinheit injizierte Gesamtmenge Gas über Ventil 8 geregelt werden. Weiterhin sind in dem Ventilstand 7 in den Gaseinspeisungsleitungen 4a und 4c Ventile 9,10 zur Änderung des Gasflusses durch die Gaseinspeisungsleitung vorhanden. Ein Vibrationssensor 11 am Konverter 2 sendet die von ihm gemessenen Vibrationssignale zu einer Verarbeitungseinheit 12. In dieser werden aufgrund von hinterlegtem Expertenwissen Vorgaben zur Änderung des Gasflusses für die Ventile 9,10 aufgestellt und über eine Verbindungsleitung dem Ventilstand 7 und damit den Ventilen 9,10 weitergegeben. Jedes der Ventile 9,10 ist über den Ventilstand mit der Verarbeitungseinheit 12 verbunden.

In Figur 1 tritt aus der Unterbaddüse 3a pro Zeiteinheit eine durch 10 Blasen dargestellte Gasmenge aus, aus der Unterbaddüse 3b pro Zeiteinheit eine durch 10 Blasen dargestellte Gasmenge, und aus der Unterbaddüse 3c pro Zeiteinheit eine durch 10 Blasen dargestellte Gasmenge. Stellt die Verarbeitungseinheit 8 das Vorliegen einer ungünstigen Frequenz A der Vibrationen des Konverters fest, gibt sie den Ventilen 9,10 Vorgaben, aufgrund derer diese die aus den individuellen Unterbaddüsen 3a und 3c pro Zeiteinheit injizierte Menge Gas verändern. Das Ergebnis der Änderung ist in Figur 2 dargestellt, in der aus Unterbaddüse 3a pro Zeiteinheit eine durch 5 Blasen dargestellte Gasmenge austritt, aus der Unterbaddüse 3b pro Zeiteinheit eine durch 10 Blasen dargestellte Gasmenge austritt, und aus der Unterbaddüse 3c pro Zeiteinheit eine durch 15 Blasen dargestellte Gasmenge austritt. Die Intensität der Frequenz A der Vibrationen des Konverters, dargestellt in arbitrary units (au) ist aufgrund der Änderung geringer geworden.

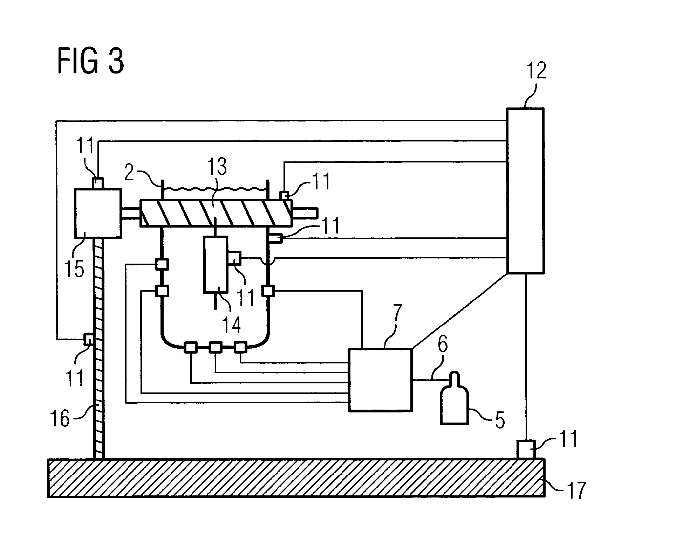

Figur 3 zeigt eine schematische Zeichnung eines Konverters 2, der in einem Tragring 13 über ein Aufhängungselement 14 befestigt ist. Ein Tragzapfen des Tragringes ist mit einem Getriebe 15 verbunden, welches über ein Gestell 16 auf einem Fundament 17 steht. Zur besseren Übersichtlichkeit wurde auf eine Darstellung vorhandener weiterer Aufhängungselemente, Teile des Gestells, und auf eine Darstellung weiterer zur Lagerung des Tragringes notwendiger Teile verzichtet. Im Konverter selbst sind mehrere Düsen in den Seitenwänden und im Boden vorhanden. Die zu diesen Düsen führenden Gaseinspeisungsleitungen sind über einen Ventilstand 7 mit der von dem Gasreservoir 5 ausgehenden Gasquellleitung 6 verbunden. Vibrationssensoren 11 an Konverter, Tragring, Getriebe, Gestell, Aufhängungselement und Fundament sind leitungsmäßig mit der Verarbeitungseinheit 12 verbunden. Auf Basis der von diesen Vibrationssensoren gemessenen Vibrationssignale erstellt die Verarbeitungseinheit 12 Vorgaben zur Änderung des Gasflusses in zu den Düsen führenden Gaseinspeisungsleitungen. Diese Vorgaben werden dem Ventilstand 7 über eine Verbindungsleitung zur Umsetzung durch nicht dargestellte Ventile in den Gaseinspeisungsleitungen weitergegeben.
- 1: Rohstahl
- 2: Konverter
- 3a, 3b, 3c: Unterbaddüsen
- 4a, 4b, 4c: Gaseinspeisungsleitungen
- 5: Gasreservoir
- 6: Gasquellleitung
- 7: Ventilstand
- 8: Ventil
- 9: Ventil
- 10: Ventil
- 11: Vibrationssensor
- 12: Verarbeitungseinheit
- 13: Tragring
- 14: Aufhängungselement
- 15: Getriebe
- 16: Gestell
- 17: Fundament

## Patentansprüche

1. Verfahren zur Kontrolle von während der Injektion von Gas in ein mit flüssiger Metallschmelze gefülltes metallurgisches Gefäß auftretenden Vibrationen des metallurgischen Gefäßes,
wobei pro Zeiteinheit eine bestimmte Gesamtmenge Gas in die flüssige Metallschmelze injiziert wird,
und die Gesamtmenge Gas durch mehrere individuelle Düsen im metallurgischen Gefäß in die flüssige Metallschmelze injiziert wird,
und wobei mit den auftretenden Vibrationen des metallurgischen Gefäßes korrelierende Messwerte während des Injizierens gemessen werden,
**dadurch gekennzeichnet, dass**
unter weitgehender Konstanthaltung der pro Zeiteinheit injizierten Gesamtmenge Gas die aus individuellen Düsen pro Zeiteinheit injizierte Menge Gas in Abhängigkeit von den gemessenen, mit den auftretenden Vibrationen des metallurgischen Gefäßes korrelierenden, Messwerten verändert wird.

2. Verfahren nach Anspruch 1, **dadurch gekennzeichnet, dass**
zumindest für eine, vorzugsweise zwei oder mehr, der individuellen Düsen die aus ihr pro Zeiteinheit injizierte Menge Gas
zumindest zeitweise
in Abhängigkeit von mit den auftretenden Vibrationen des metallurgischen Gefäßes korrelierenden Messwerten
verändert wird.

3. Verfahren nach Anspruch 2, **dadurch gekennzeichnet, dass**
die durch die Veränderung der pro Zeiteinheit aus einer individuellen Düse injizierte Menge Gas
hervorgerufene Änderung der Intensität zumindest eines mit den auftretenden Vibrationen des metallurgischen Gefäßes korrelierenden Messwertes
verfolgt wird,
und die Veränderung der pro Zeiteinheit aus einer individuellen Düse injizierten Menge Gas so lange durchgeführt wird, bis die der zumindest eine mit den auftretenden Vibrationen des metallurgischen Gefäßes korrelierende Messwert einen vorgegebenen Wert erreicht oder bis der Gasfluss aus der Düse ein vorgegebenes Maximum oder Minimum erreicht.

4. Verfahren nach einem der Ansprüche 1 bis 3, **dadurch gekennzeichnet, dass** die mit den auftretenden Vibrationen des metallurgischen Gefäßes korrelierenden Messwerte gefiltert und digital bearbeitet werden, bevor sie zur Veränderung der aus individuellen Düsen pro Zeiteinheit injizierten Menge Gas herangezogen werden.

5. Verfahren nach einem der Ansprüche 1 bis 4, **dadurch gekennzeichnet, dass** beim Messen der mit den auftretenden Vibrationen des metallurgischen Gefäßes korrelierenden Messwerte Frequenzen und/oder Intensitäten von Vibrationen ermittelt werden.

6. Verfahren nach einem der Ansprüche 1 bis 5, **dadurch gekennzeichnet, dass** die mit den auftretenden Vibrationen des metallurgischen Gefäßes korrelierende Messwerte mit Vibrationen des metallurgischen Gefäßes korrelieren, deren Frequenzen zwischen 0,1 Hertz und 100 Hertz, bevorzugt zwischen 0,2 Hertz und 20 Hertz liegen.

7. Verfahren nach einem der Ansprüche 1 bis 6, **dadurch gekennzeichnet, dass** die mit den auftretenden Vibrationen des metallurgischen Gefäßes korrelierende Messwerte, in Abhängigkeit von denen die aus individuellen Düsen pro Zeiteinheit eingeleitete Menge Gas verändert wird, mit Vibrationen des metallurgischen Gefäßes korrelieren, deren Frequenzen zwischen 0,2 Hertz und 20 Hertz liegen

8. Vorrichtung zur Kontrolle von während der Injektion von Gas in ein mit flüssiger Metallschmelze gefülltes metallurgisches Gefäß auftretenden Vibrationen des metallurgischen Gefäßes, welches mit mehreren individuellen Düsen zur Injektion von Gas versehen ist, wobei die individuellen Düsen jeweils mit einer eigenen Gaseinspeisungsleitung (4a,4b,4c) verbunden sind,
mit mindestens einem Sensor für mit den auftretenden Vibrationen des metallurgischen Gefäßes korrelierende Messwerte,
mit einer Verarbeitungseinheit (12) zur Verarbeitung der von dem Sensor gemessenen Messwerte,
**dadurch gekennzeichnet, dass**
in mindestens zwei Gaseinspeisungsleitungen (4a,4c) mindestens eine Vorrichtung zur Änderung des Gasflusses durch die Gaseinspeisungsleitung vorhanden ist,
und jede Vorrichtung zur Änderung des Gasflusses mit der Verarbeitungseinheit (12) verbunden ist.

9. Vorrichtung nach Anspruch 8, **dadurch gekennzeichnet, dass** die Vorrichtung zur Änderung des Gasflusses durch die Gaseinspeisungsleitung eine kontinuierliche Änderung des Gasflusses erlaubt.

10. Vorrichtung nach Anspruch 8, **dadurch gekennzeichnet, dass** die Vorrichtung zur Änderung des Gasflusses durch die Gaseinspeisungsleitung eine Vorrichtung zur stufenweisen Änderung des Gasflusses ist.

11. Vorrichtung nach einem der Ansprüche 8 bis 10, **dadurch gekennzeichnet, dass** der Sensor für mit den auftretenden Vibrationen des metallurgischen Gefäßes korrelierende Messwerte ein Vibrationssensor (11) ist.

12. Vorrichtung nach Anspruche 11, **dadurch gekennzeichnet, dass** der Vibrationssensor (11) eine Drehmomentenmessung, ein Dehnungsmessstreifen, ein Wegaufnehmer, ein Geschwindigkeits- oder Beschleunigungsaufnehmer ist.

## Claims

1. A method for controlling vibrations of a metallurgical vessel occurring during the injection of gas into the metallurgical vessel filled with liquid molten metal,
a certain total amount of gas per unit of time being injected into the liquid molten metal,
and the total amount of gas being injected into the liquid molten metal through a number of individual nozzles in the metallurgical vessel,
and measured values correlating with the vibrations of the metallurgical vessel occurring being measured during the injection,
**characterized in that**,
while keeping the total amount of gas injected per unit of time largely constant, the amount of gas injected from individual nozzles per unit of time is changed in dependence on the measured values that are measured and correlate with the vibrations of the metallurgical vessel occurring.

2. The method as claimed in claim 1, **characterized in that**, at least for one of the individual nozzles, preferably two or more of them, the amount of gas injected from them per unit of time is changed, at least for a time, in dependence on measured values correlating with the vibrations of the metallurgical vessel occurring.

3. The method as claimed in claim 2, **characterized in that** the changing of the intensity of at least one measured value correlating with the vibrations of the metallurgical vessel occurring that is brought about by changing the amount of gas injected from an individual nozzle per unit of time is traced, and the changing of the amount of gas injected from an individual nozzle per unit of time is carried out until the at least one measured value correlating with the vibrations of the metallurgical vessel occurring reaches a prescribed value or until the gas flow from the nozzle reaches a prescribed maximum or minimum.

4. The method as claimed in one of claims 1 to 3, **characterized in that** the measured values correlating with the vibrations of the metallurgical vessel occurring are filtered and digitally processed before they are used for changing the amount of gas injected from the individual nozzles per unit of time.

5. The method as claimed in one of claims 1 to 4, **characterized in that**, when measuring the measured values correlating with the vibrations of the metallurgical vessel occurring, frequencies and/or intensities of vibrations are determined.

6. The method as claimed in one of claims 1 to 5, **characterized in that** the measured values correlating with the vibrations of the metallurgical vessel occurring correlate with vibrations of the metallurgical vessel that have frequencies between 0.1 Hertz and 100 Hertz, preferably between 0.2 Hertz and 20 Hertz.

7. The method as claimed in one of claims 1 to 6, **characterized in that** the measured values, correlating with the vibrations of the metallurgical vessel occurring, in dependence on which the amount of gas introduced from individual nozzles per unit of time is changed correlate with vibrations of the metallurgical vessel of frequencies that lie between 0.2 Hertz and 20 Hertz.

8. A device for controlling vibrations of a metallurgical vessel occurring during the injection of gas into the metallurgical vessel filled with liquid molten metal and provided with a number of individual nozzles for the injection of gas, the individual nozzles being respectively connected to a gas feed line (4a, 4b, 4c) of their own,
with at least one sensor for measured values correlating with the vibrations of the metallurgical vessel occurring,
with a processing unit (12) for processing the measured values measured by the sensor,
**characterized in that**
in at least two gas feed lines (4a, 4c) there is at least one device for changing the gas flow through the gas feed line, and each device for changing the gas flow is connected to the processing unit (12).

9. The device as claimed in claim 8, **characterized in that** the device for changing the gas flow through the gas feed line allows a continuous changing of the gas flow.

10. The device as claimed in claim 8, **characterized in that** the device for changing the gas flow through the gas feed line is a device for changing the gas flow in stages.

11. The device as claimed in one of claims 8 to 10, **characterized in that** the sensor for measured values correlating with the vibrations of the metallurgical vessel occurring is a vibration sensor (11).

12. The device as claimed in claim 11, **characterized in that** the vibration sensor (11) is a torque measurement, a strain gage, a position pickup, a velocity pickup or an acceleration pickup.

## Revendications

1. Procédé de contrôle des vibrations d'un récipient métallurgique rempli de métal en fusion qui surviennent pendant l'injection d'un gaz, et dans lequel
une quantité totale définie de gaz est injectée par unité de temps dans le métal en fusion,
la quantité totale de gaz est injectée par plusieurs tuyères distinctes dans le métal en fusion présent dans le récipient métallurgique,
des valeurs de mesure corrélées aux vibrations du récipient métallurgique qui surviennent pendant l'injection de gaz sont mesurées,
**caractérisé en ce que**
en maintenant constante la quantité totale de gaz injectée par unité de temps, la quantité de gaz injectée par unité de temps par les différentes tuyères est modifiée en fonction des valeurs de mesure mesurées, corrélées aux vibrations du récipient métallurgique.

2. Procédé selon la revendication 1, **caractérisé en ce qu'**au moins pour une et de préférence pour deux ou plusieurs des différentes tuyères, la quantité de gaz injectée par unité de temps est modifiée au moins une partie du temps en fonction des valeurs de mesure mesurées, corrélées aux vibrations du récipient métallurgique.

3. Procédé selon la revendication 2, caractérisé en ce la modification de l'intensité d'au moins une des valeurs de mesure corrélée corrélées aux vibrations du récipient métallurgique, provoquée par la modification de la quantité de gaz injectée par unité de temps par une tuyère donnée est suivie et en ce que la modification de la quantité de gaz injectée par unité de temps par une tuyère donnée est effectuée jusqu'à ce que la valeur de mesure corrélée aux vibrations du récipient métallurgique atteigne une valeur prédéterminée ou jusqu'à ce que le débit de gaz sortant de la tuyère ait atteint un maximum ou un minimum prédéterminés.

4. Procédé selon l'une des revendications 1 à 3, **caractérisé en ce que** les valeurs de mesure corrélées aux vibrations du récipient métallurgique sont filtrées et traitées numériquement avant qu'elles interviennent sur la quantité de gaz injectée par unité de temps par les différentes tuyères.

5. Procédé selon l'une des revendications 1 à 4, **caractérisé en ce que** lors de la mesure des valeurs de mesure corrélées aux vibrations du récipient métallurgique, la fréquence et/ou l'amplitude d'es vibrations sont déterminées.

6. Procédé selon l'une des revendications 1 à 5, **caractérisé en ce que** les valeurs de mesure corrélées aux vibrations du récipient métallurgique sont corrélées à des vibrations du récipient métallurgique dont la fréquence est située entre 0,1 Hertz et 100 Hertz et de préférence entre 0,2 Hertz et 20 Hertz.

7. Procédé selon l'une des revendications 1 à 6, **caractérisé en ce que** les valeurs de mesure corrélées aux vibrations du récipient métallurgique et en fonction desquelles la quantité de gaz injectée par unité de temps par les différentes tuyères sont corrélées à des vibrations du récipient métallurgique dont la fréquence est située entre 0,2 Hertz et 20 Hertz.

8. Dispositif de contrôle des vibrations d'un récipient métallurgique rempli de métal en fusion qui surviennent pendant l'injection d'un gaz dans le récipient métallurgique équipé de plusieurs tuyères distinctes d'injection de gaz, les différentes tuyères étant reliées chacune à un conduit propre (4a, 4b, 4c) d'apport de gaz, le dispositif présentant :
au moins une sonde délivrant des valeurs de mesure corrélées aux vibrations ainsi provoquées du récipient métallurgique,
une unité de traitement (12) qui traite les valeurs de mesure mesurées par la sonde,
**caractérisé en ce que**
au moins deux conduits (4a, 4c) d'apport de gaz présentent au moins un dispositif de modification du débit de gaz délivré par le conduit d'apport de gaz et
**en ce que** le dispositif de modification du débit de gaz est relié à l'unité de traitement (12).

9. Dispositif selon la revendication 8, **caractérisé en ce que** le dispositif de modification du débit de gaz délivré par le conduit d'apport de gaz permet une modification continue du débit de gaz.

10. Dispositif selon la revendication 8, **caractérisé en ce que** le dispositif de modification du débit de gaz délivré par le conduit d'apport de gaz est un dispositif qui modifie le débit de gaz par gradins.

11. Dispositif selon l'une des revendications 8 à 10, **caractérisé en ce que** la sonde qui délivre des valeurs de mesures corrélées aux vibrations du récipient métallurgique est une sonde de vibrations (11).

12. Dispositif selon la revendication 11, **caractérisé en ce que** la sonde de vibrations (11) est une sonde de mesure d'un couple de rotation, un ruban de mesure d'allongement, un enregistreur de déplacements ou un enregistreur de vitesse ou d'accélération.
